# FASCICULE DE BREVET EUROPEEN

(11) **EP 1 269 007 B1**
(45) Date de publication et mention de la délivrance du brevet: **05.10.2005**
(21) Numéro de dépôt: 01921447.7
(22) Date de dépôt: 02.04.2001
(51) Int. Cl.: F02M 35/104

(54) **COLLECTEUR D'ADMISSION D'AIR A ELARGISSEMENT BRUSQUE, POUR MOTEUR A COMBUSTION INTERNE S EXTERIEURS ET POUR LA DIFUSION DE TELLES SEQUENCES**
SAUGROHR MIT ABRUPTER QUERSCHNITTSERWEITERUNG FÜR EINE BRENNKRAFTMASCHINE
AIR INTAKE MANIFOLD WITH SUDDEN ENLARGEMENT FOR INTERNAL COMBUSTION ENGINE

(30) Priorité: 04.04.2000 FR 0004274
(43) Date de publication de la demande: 02.01.2003
(73) Titulaire: MAGNETI MARELLI FRANCE, 92000 Nanterre (FR)
(72) Inventeur: PONTOPPIDAN, Michael, F-92700 Colombes (FR)
(74) Mandataire: Bérogin, Francis
(86) Numéro de dépôt international: PCT/FR2001/000978
(87) Numéro de publication internationale: WO 2001/075295

(56) Documents cités:
- DE-A- 19 532 751
- FR-A- 1 513 513
- GB-A- 2 239 898
- US-A- 4 727 829
- US-A- 4 854 271
- US-A- 5 150 669
- PATENT ABSTRACTS OF JAPAN vol. 002, no. 039 (M-012), 15 mars 1978 (1978-03-15) -& JP 52 154921 A (NIPPON DENSO CO LTD), 23 décembre 1977 (1977-12-23)

## Description

La présente invention concerne un collecteur d'admission d'air, pour un moteur à combustion interne, en particulier du type comprenant au moins une chambre de combustion et au moins un cylindre dans lequel un piston est animé d'un mouvement alternatif, la chambre de combustion étant alimentée en air et en carburant par l'ouverture d'au moins une soupape d'admission fermant sélectivement un conduit d'admission dans une culasse du moteur.

Pour l'alimentation en air d'un tel moteur, il est connu d'utiliser un collecteur d'admission d'air comprenant :
- un plenum d'amont, commun à tous les conduits d'air aval alimentant les chambres de combustion du moteur, et alimenté en air par un orifice d'entrée d'air relié à un dispositif de commande d'admission d'air au moteur, tel qu'un corps papillon, monté en amont dudit orifice d'entrée, et,
- pour chaque chambre de combustion du moteur, au moins un conduit d'air aval, reliant un orifice de sortie respectif du plenum à un orifice correspondant d'alimentation de la chambre de combustion correspondante du moteur, l'orifice d'alimentation étant ménagé dans au moins une bride de fixation du collecteur à la culasse du moteur, le plenum et chacun des conduits d'air au moins étant réalisés en un matériau de synthèse, qui est généralement une matière plastique technique.

Sur ces collecteurs d'admission connus, essentiellement en matière plastique, les conduits d'air présentent généralement une section de passage constante, en forme et/ou en aire de section, ou à évolution progressive en forme, pour passer progressivement d'une section circulaire à une section rectangulaire ou carrée à sommets arrondis, ou inversement, et/ou à section de passage très progressivement et très légèrement décroissante de l'amont vers l'aval, pour former des conduits convergents.

Quel que soit le moteur, il existe des combinaisons de régimes et de charges pour lesquelles il est possible de trouver une position correspondante du papillon de contrôle du flux d'air d'admission au moteur, au cours de la levée d'une soupape d'admission, à l'ouverture par cette dernière du conduit d'admission correspondant, en phase d'admission dans une chambre de combustion correspondante du moteur, et une amplitude de la levée de soupape d'admission pour laquelle les conditions d'écoulement de l'air autour de la soupape d'admission sont des conditions soniques, en même temps que les surfaces mouillées par l'écoulement d'air sur cette soupape d'admission et sur le siège de cette soupape sont telles qu'il se produit un bref sifflement strident, d'intensité sonore importante.

Etant donné que le déclenchement du sifflement est provoqué par un rapport spécifique et adapté entre la section débitante du corps papillon et celle de la section d'admission, le bruit se manifeste de manière soutenue sur moteur tournant lors d'un mouvement rotationnel dudit papillon - typiquement durant une ouverture à régime réduit de rotation du moteur d'une faible charge vers une forte charge.

Lorsque le collecteur d'admission tel que défini ci-dessus est réalisé en fonderie métallique telle qu'en aluminium, sa masse est suffisamment importante pour que ce sifflement soit suffisamment amorti au point de ne pas être jugé gênant au regard des critères habituellement appliqués pour la mise au point d'un véhicule. Par contre, pour des collecteurs d'admission d'air essentiellement en matière plastique, il se trouve que ce sifflement strident n'est pas amorti et peut être audible de l'extérieur, lorsqu'il n'est pas masqué par d'autres bruits de fonctionnement du moteur et de son environnement.

Le problème à la base de l'invention est de remédier à cet inconvénient particulièrement gênant des collecteurs d'admission d'air du type défini ci-dessus, essentiellement réalisés en matière plastique, et, d'une manière plus générale, de proposer des moyens permettant de rendre plus silencieux les collecteurs d'admission d'air.

A cet effet, le collecteur d'admission selon l'invention, du type présenté ci-dessus, se caractérise en ce que, pour chaque chambre de combustion du moteur, au moins un conduit d'air aval correspondant présente au moins un élargissement brusque de sa section de passage, immédiatement suivi vers l'aval d'une portion de conduit présentant une réduction progressive de section vers l'aval, se terminant en amont de la bride de fixation sur la culasse du moteur.

L'élargissement brusque du conduit d'air crée ainsi une interface de retard dans la transmission du signal de gradient de pression, provoqué dans la zone du corps papillon, en raison de la variation brutale de la densité de l'air dans l'élargissement brusque, et la portion de conduit à réduction progressive de section qui fait suite à l'élargissement brusque constitue une zone de réaccélération du flux d'air, compensant au moins partiellement la perte de charge créée par l'élargissement brusque, et permettant une récupération d'énergie semblable à celle qui peut être obtenue par un effet venturi.

Ainsi, le bruit n'est pas éliminé mais décalé, par rapport aux conditions propices au sifflement au niveau de la soupape d'admission et de son siège, grâce à un retard dans la transmission de l'onde de pression, qui est introduit dans le conduit d'air.

L'élargissement brusque par augmentation brusque de la section de passage du conduit d'air peut être assuré sur au moins deux côtés opposés de ce conduit d'air, ou sur toute la périphérie de ce dernier, en particulier lorsque sa section transversale est circulaire ou oblongue, l'élargissement brusque et la portion de conduit à réduction progressive de section pouvant être de résolution autour de l'axe longitudinal du conduit. Mais il est également possible que l'augmentation brusque de section soit assurée d'un seul côté de l'axe longitudinal du conduit d'air, ce qui est avantageux lorsque chaque conduit d'air est réalisé par solidarisation, par exemple par thermosoudage ou par soudage aux ultrasons ou par vibrations, de deux demi-coques moulées chacune d'une seule pièce, car l'élargissement brusque et la portion de conduit à réduction progressive de section peuvent être présentés par l'une au moins des deux demi-coques, sur laquelle cet élargissement et cette portion à réduction progressive de section sont réalisés par le moulage de cette demi-coque.

Avantageusement de plus, le rapport de la section du conduit d'air au niveau de l'élargissement brusque à la section du conduit d'air immédiatement en amont de cet élargissement brusque est de l'ordre de 2.

En outre, si la section des conduits d'air est sensiblement quadrangulaire, il est avantageux que la portion de conduit à réduction progressive de section s'étende sur une longueur, mesurée selon l'axe longitudinal du conduit d'air, qui est comprise entre environ 2,5 et environ 3 fois la hauteur de l'élargissement brusque, mesurée sensiblement perpendiculairement à cet axe longitudinal du conduit d'air, et au niveau de cet élargissement brusque, si, par ailleurs, la largeur du conduit d'air, perpendiculairement à sa hauteur et à sa longueur, est sensiblement constante.

Lorsque, de manière connue, chaque conduit présente, en amont de l'orifice d'alimentation correspondant dans la bride de fixation sur la culasse, un logement pour un injecteur de carburant, injectant ce carburant vers l'orifice d'alimentation, il est en outre avantageux que la portion de conduit à réduction progressive de section ait son extrémité aval qui est située en amont de ce logement de l'injecteur.

D'une manière générale, il est avantageux que l'élargissement brusque et la portion de conduit à réduction progressive de section soient situés sensiblement dans la moitié aval du conduit d'air correspondant.

L'élargissement brusque et la portion de conduit à réduction progressive de section peuvent être situés dans une partie sensiblement rectiligne du conduit d'air, auquel cas, selon une structure simple et économique du collecteur, la portion de conduit à réduction progressive de section est avantageusement au moins partiellement délimitée par au moins un plan incliné, en cas de section sensiblement quadrangulaire du conduit d'air, ou par au moins une portion de tronc de cône, en cas de section circulaire ou oblongue du conduit d'air.

Par contre, si l'élargissement brusque et la portion de conduit à réduction progressive de section sont situés dans une partie courbe du conduit d'air, il est préférable que la portion de conduit à réduction progressive de section soit au moins partiellement délimitée par une surface courbe, à concavité tournée dans la même direction que celle de la partie courbe du conduit d'air.

D'autres avantages et caractéristiques de l'invention ressortiront de la description donnée ci-dessous, à titre non limitatif, d'exemples de réalisation décrits en référence aux dessins annexés sur lesquels :
- la figure 1 est une vue en coupe axiale schématique d'un premier exemple de collecteur d'admission d'air selon l'invention et monté sur la culasse d'un moteur à combustion interne,
- la figure 2 est une vue en coupe axiale d'une variante de réalisation d'une partie du collecteur d'admission de la figure 1, au niveau de l'élargissement brusque et de la portion de conduit à réduction progressive de section,
- la figure 3 est une vue analogue à la figure 1 d'un second exemple de collecteur d'admission, avec des conduits d'air recourbés dans leur partie aval, et
- la figure 4 est une vue schématique en perspective de deux demi-coques moulées en matière plastique pour la réalisation d'un conduit d'air du collecteur selon la figure 1.

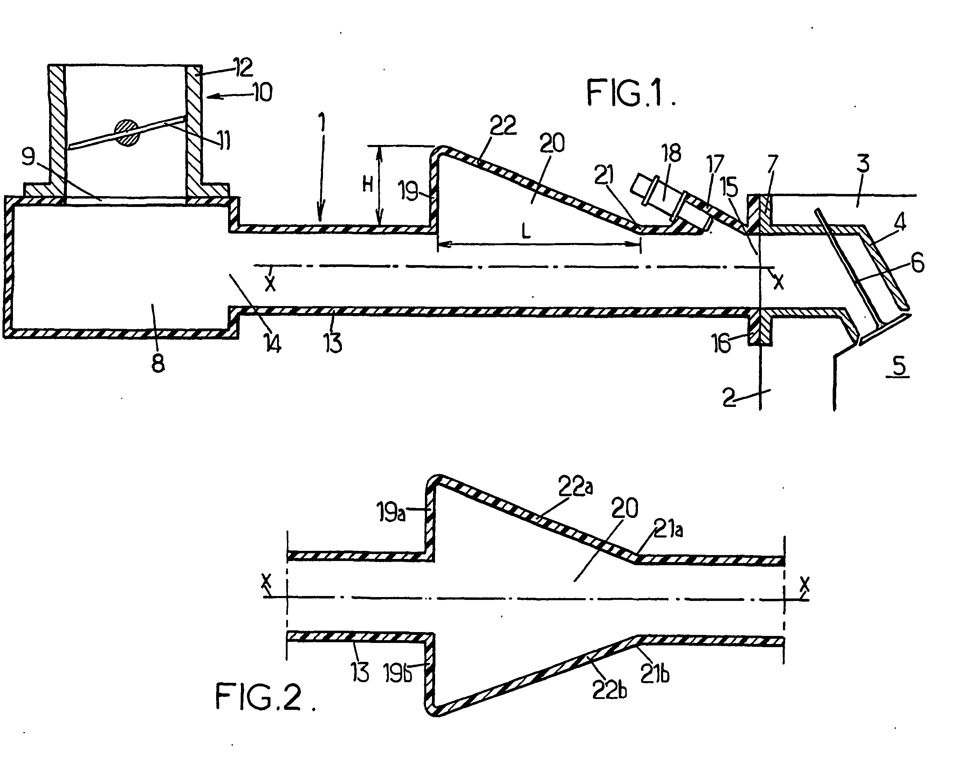

Le collecteur d'admission d'air 1 de la figure 1 alimente en air un moteur 2 à combustion interne, du type à mouvement alternatif d'un piston dans chaque cylindre du moteur 2, avec lequel une culasse 3, montée sur le moteur 2, délimite pour chaque piston une chambre de combustion 5. Cette chambre 5 est alimentée en mélange air-carburant par au moins un conduit d'admission 4, ménagé dans la culasse 3 et débouchant, d'une part, dans la chambre de combustion 5 par un orifice d'admission sélectivement ouvert ou fermé par une soupape d'admission 6, de manière connue, et, d'autre part, dans une bride 7 de la culasse 3, sur laquelle se fixe le collecteur d'admission 1.

Ce collecteur 1, réalisé essentiellement en un matériau de synthèse moulable comprend un plenum d'amont 8, lui-même alimenté en air par un orifice d'entrée d'air 9 en communication avec la sortie d'un dispositif principal de commande d'admission d'air au moteur 2, ce dispositif étant de préférence un corps papillon 10, comprenant, de manière bien connue, un papillon 11 en forme de disque monté pivotant autour d'un axe transversal dans un corps tubulaire 12 fixé sur le plenum 8 directement en amont de l'orifice d'entrée d'air 9. Le flux d'air d'admission dans le plenum 8 est contrôlé par la position du papillon 11 dans le corps 12, et le plenum 8 est relié à chacune des chambres de combustion 5 du moteur 2 par au moins un conduit d'air aval 13, qui met en communication une sortie 14 respective du plenum 8, à l'extrémité amont du conduit d'air 13, avec, à son extrémité aval, un orifice 15 d'alimentation d'un conduit d'admission 4 de la chambre de combustion 5 correspondante, cet orifice d'alimentation 15 étant ménagé dans une bride 16 de fixation du collecteur 1 sur la bride 7 de la culasse 3.

Pour simplifier la description, on suppose, dans un exemple simple d'application, que le moteur 2 est un moteur à quatre cylindres en ligne et que le collecteur 1 comprend quatre conduits d'air 13, soit un seul conduit 13 respectif pour chacune des quatre chambres de combustion 5 du moteur 2.

Les quatre conduits 13 sont sensiblement identiques l'un à l'autre, et présentent une section transversale qui, dans cet exemple, est sensiblement constante et en forme de rectangle à sommets arrondis, chaque conduit 13 étant rectiligne sur toute sa longueur, la section pouvant aussi être circulaire ou oblongue et, éventuellement, très progressivement convergente vers l'aval.

A faible distance en amont de la bride 16, chaque conduit 13 présente un logement 17 qui est incliné de l'extérieur vers l'intérieur du conduit 13 et de l'amont vers l'aval, pour recevoir un injecteur 18 de carburant, injectant du carburant vers l'orifice d'alimentation 15 correspondant, dans le flux d'air sortant du conduit 13 correspondant par cet orifice 15 dans la bride 16, pour alimenter en mélange air-carburant l'unique conduit d'admission 4 de la chambre de combustion 5 considérée.

En amont du logement 17 et de l'injecteur 18, mais dans sa moitié aval, chaque conduit 13 présente un élargissement brusque 19, délimité par une portion de paroi s'étendant sensiblement perpendiculairement à l'axe longitudinal X-X du conduit 13, cet élargissement brusque 19 étant immédiatement suivi, vers l'aval, d'une portion 20 de conduit de section progressivement décroissante vers l'aval. Cette portion 20 à réduction progressive de section se termine, à son extrémité aval 21, en amont du logement 17 et de l'injecteur 18 correspondant, donc en amont de la bride 16, et, en aval de cette extrémité aval 21 de la portion 20, le conduit 13 présente sensiblement la même forme de section transversale qu'en amont de l'élargissement brusque 19.

Dans l'exemple représenté sur la figure 1, l'élargissement brusque 19 est réalisé d'un seul côté de l'axe longitudinal X-X du conduit 13, et plus précisément du même côté que celui dans lequel est ménagé le logement 17 recevant l'injecteur 18, le terme "côté" signifiant un côté proprement dit d'un périmètre sensiblement polygonal ou quadrangulaire du conduit 13 ou encore une partie ou arc d'un périmètre circulaire ou oblong du conduit 13.

L'augmentation brusque de section de passage du conduit 13 assurée par l'élargissement brusque 19 est telle que le rapport de la section du conduit 13 au niveau de l'élargissement brusque 19 à la section de ce conduit 13 immédiatement en amont de l'élargissement 19 est voisin de 2.

Ainsi, dans un exemple de conduit d'air 13 de section transversale en forme de rectangle à sommets arrondis, si la longueur du conduit 13 est mesurée selon son axe longitudinal X-X, sa largeur considérée perpendiculairement à l'axe X-X et au plan de la figure 1, et sa hauteur mesurée perpendiculairement à l'axe X-X et dans le plan de la figure 1, la hauteur H de la paroi 19 de l'élargissement brusque est sensiblement égale à la hauteur du conduit 13 en amont de l'élargissement brusque 19 et en aval de l'extrémité aval 21 de la portion 20 à réduction progressive de section, si la largeur du conduit 13 est sensiblement constante de la sortie 14 du plenum 8 à l'orifice d'alimentation 15 dans la bride aval 16.

De plus, la longueur de la portion 20 de conduit à réduction progressive de section, c'est-à-dire la longueur, selon l'axe longitudinal X-X, entre l'élargissement brusque 19 et l'extrémité aval 21 de cette portion 20, est une longueur L comprise entre environ 2,5 fois et environ 3 fois la hauteur H de l'élargissement brusque 19.

Dans cette forme de réalisation, comme l'élargissement brusque 19 et la portion 20 à réduction progressive de section sont situés dans une partie rectiligne du conduit 13 ayant une forme de section transversale sensiblement rectangulaire et constante, la portion 20 est délimitée par une paroi 22 qui est un plan incliné vers l'aval et vers l'axe longitudinal X-X du tube 13, à partir de l'élargissement brusque 19, ce qui en simplifie la réalisation par moulage.

La figure 2 représente une variante de réalisation de l'élargissement brusque et de la portion de conduit à réduction progressive de section dans une partie rectiligne d'un conduit d'air tel que montré sur la figure 1.

Sur la figure 2, l'élargissement brusque est assuré par augmentation brusque de section sur deux côtés opposés ou sur deux parties opposées du périmètre du conduit d'air 13, par rapport à son axe longitudinal X-X. L'élargissement brusque est ainsi délimité par deux portions de paroi 19a et 19b, sensiblement perpendiculaires à l'axe longitudinal X-X du conduit 13, et, dans le cas d'un conduit 13 de section quadrangulaire, qui sont chacune prolongée vers l'aval par l'un respectivement de deux plans inclinés 22a et 22b formant des portions de paroi qui, d'un côté et de l'autre de l'axe X-X, délimitent la portion de conduit 20 à réduction progressive de section, jusqu'aux extrémités aval 21a et 21b respectives de ces parois, en aval desquelles le conduit d'air 13 retrouve, vers l'aval, une section semblable à sa section en amont de l'élargissement brusque 19a-19b.

Dans cette variante de la figure 2, on retrouve que le rapport de la section de passage au niveau de l'élargissement brusque 19a-19b à la section du conduit 13 en amont de cet élargissement brusque est de l'ordre de 2, et que la longueur de la portion de conduit 20 de section progressivement décroissante (entre l'élargissement brusque 19a-19b et les extrémités aval 21a et 21b des plans inclinés 22a et 22b) est d'environ 2,5 fois à environ 3 fois la hauteur de l'élargissement brusque, qui, dans cet exemple, est sensiblement symétrique par rapport à l'axe X-X, c'est-à-dire de hauteur H/2 pour chacune des parois 19a et 19b.

Sur la figure 2, si le conduit 13 est de section circulaire ou oblongue, l'élargissement brusque peut être réalisé sur deux axes (diamétralement) opposés de son périmètre, et même être, comme la portion de conduit 20 à réduction progressive de section, de révolution autour de l'axe X-X. La portion de paroi 19a-19b délimitant l'élargissement brusque est alors annulaire, et la portion de conduit 20 est alors un tronc de cône. Plus généralement, la cuve des portions de paroi 22a et 22b peut être une portion de surface tronconique.

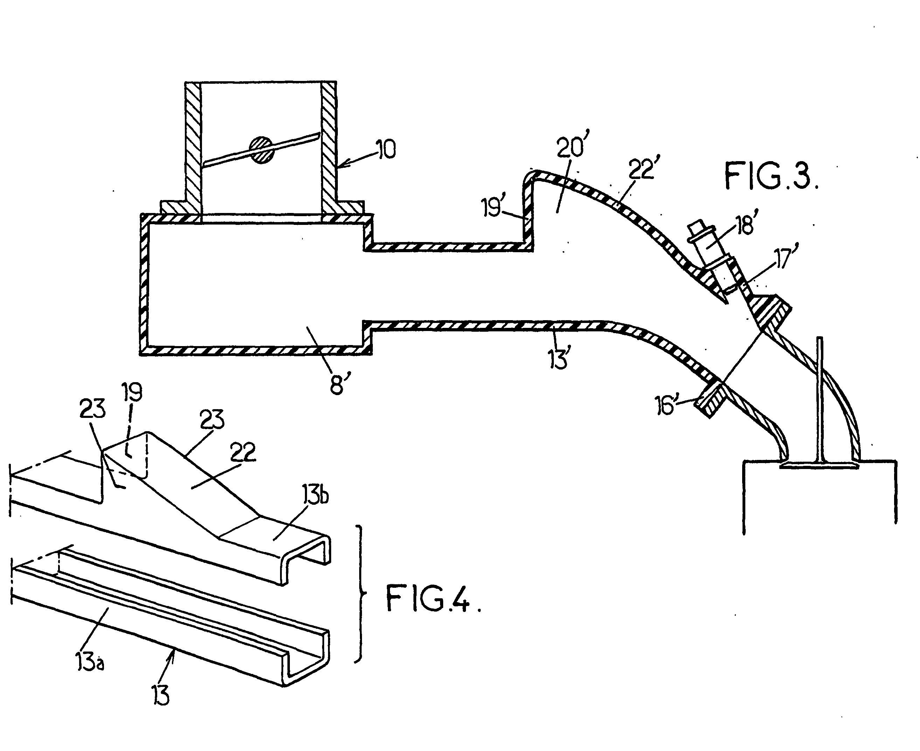

L'exemple de réalisation de la figure 3 diffère de celui de la figure 1 essentiellement en ce que sensiblement la moitié aval de chaque conduit d'air 13', reliant le plenum 8' à la bride 16' de fixation sur la culasse et le moteur, est une partie courbe de ce conduit 13'. Dans ce cas, l'élargissement brusque 19' et la portion de conduit 20' à réduction progressive de section qui lui fait immédiatement suite vers l'aval, sont formés dans cette moitié aval courbe du conduit 13', et plus précisément du côté de l'axe longitudinal X-X de ce conduit 13' qui est tourné vers la convexité de cette partie courbe de conduit 13', en amont du logement 17' et de l'injecteur de carburant 18' également situés sur le côté de l'élargissement brusque du tube 13'. Au cas où le centre du rayon de courbure du conduit 13' est situé à l'opposé de ce qui est montré sur la figure 3, une variante est celle de l'emplacement de l'injecteur du côté opposé à celui de l'élargissement brusque 19'. La portion de paroi délimitant l'élargissement brusque 19' reste sensiblement perpendiculaire à l'axe longitudinal du tube 13', mais la portion de paroi 22' qui délimite, vers l'extérieur, la portion de conduit 20' à réduction progressive de section n'est plus un plan incliné, mais est délimitée, au moins en partie, et de préférence dans sa partie adjacente à son extrémité aval 21', par une surface courbe, dont la concavité est tournée dans le même sens que celle de la moitié aval courbe du conduit d'air 13'.

Dans cet exemple également, on retrouve que le rapport de la section de passage au niveau de l'élargissement brusque 19' à la section immédiatement en amont de ce dernier est de l'ordre de 2, et que la longueur (mesurée selon l'axe du conduit 13') de la portion 20' à réduction progressive de section est d'environ 2,5 fois à environ 3 fois la hauteur de l'élargissement brusque 19'.

Ainsi, dans les différentes réalisations décrites ci-dessus, l'élargissement brusque 19, 19a-19b ou 19' constitue une interface introduisant un retard dans la transmission du signal de pression depuis le corps papillon 10 jusqu'au passage délimité entre la soupape d'admission 6 et son siège dans la culasse 3, ce retard de transmission pouvant être attribué à la variation brutale de densité et de pression dans l'élargissement brusque, au niveau duquel la perte de charge peut être calculée par application simplifiée du bilan de quantité de mouvement, en négligeant les frottements sur les parois, à l'aide de la formule connue de Borda-Carnot. La réduction progressive de section dans la portion de conduit 20 ou 20', faisant immédiatement suite vers l'aval à l'élargissement brusque, assure une récupération d'énergie, par réaccélération du flux d'air, et permet de compenser en partie la perte de charge due à l'élargissement brusque, d'une manière similaire à l'effet Venturi. De la sorte, les moyens purement passifs et pratiquement inusables que constituent l'élargissement brusque et la portion de conduit à réduction progressive de section, ont procuré, dans une réalisation spécifique, le résultat remarquable d'amortir d'environ 5db le sifflement strident qui est produit, dans les conditions mentionnées ci-dessus, par un collecteur d'admission en matière plastique analogue à ceux décrits ci-dessus mais sans ces moyens particuliers que sont l'élargissement brusque et la portion de conduit à réduction progressive de section.

Les collecteurs d'admission d'air selon l'invention ont leur plenum 8 ou 8' et leurs conduits d'air 13 ou 13' réalisés en un matériau de synthèse moulable et, pour faciliter leur fabrication, chaque conduit d'air 13 est, par exemple, obtenu par solidarisation, par thermosoudage ou soudage aux ultrasons ou aux vibrations, de deux demi-coques telles que représentées sur la figure 4, pour réaliser un conduit d'air 13 rectiligne du collecteur 1 de la figure 1.

Sur la figure 4, le conduit d'air 13 comprend une demi-coque inférieure 13a et une demi-coque supérieure 13b, ayant chacune une section transversale sensiblement en forme de "U", et chacune moulée d'une seule pièce. Ces deux coques 13a et 13b sont solidarisées l'une à l'autre le long des extrémités longitudinales des ailes de leur section en "U". La demi-coque supérieure 13b présente le plan incliné 22 et la portion de paroi verticale 19 qui délimitent respectivement la portion de conduit 20 et l'élargissement brusque de l'exemple de la figure 1. Bien entendu, le long des côtés du plan incliné 22, le conduit d'air 13 est fermé par des portions triangulaires de paroi verticale 23 qui complètent la délimitation de la portion 20 à réduction progressive de section.

La liaison d'un conduit 13, ainsi réalisé par solidarisation de deux demi-coques longitudinales séparément moulées d'une seule pièce, d'une part, à la bride 16, elle-même moulée d'une seule pièce ou en plusieurs pièces assemblées, et, d'autre part, au plenum 8, lui-même réalisé par solidarisation d'au moins deux pièces moulées, peut également être réalisée par soudage (thermosoudage, soudage aux ultrasons ou aux vibrations), ou, en variante, chacune des demi-coques 13a et 13b peut être moulée d'une seule pièce avec une partie respectivement de la bride 16 et une partie respectivement du plenum 8.

## Revendications

1. Collecteur d'admission d'air, pour moteur (2) à combustion interne, le collecteur (1) étant du type comprenant un plenum (8) d'amont, commun à tous les conduits d'air aval (13) alimentant les chambres de combustion (5) du moteur (2), et alimenté en air par un orifice (9) d'entrée d'air relié à un dispositif de commande d'admission d'air au moteur (2), tel qu'un corps papillon (10), monté en amont dudit orifice (9) d'entrée, et, pour chaque chambre de combustion (5) du moteur (2), l'un au moins des conduits d'air aval (13) reliant un orifice de sortie (14) respectif du plenum (8) à un orifice (15) correspondant d'alimentation de ladite chambre de combustion (5) du moteur (2), ledit orifice d'alimentation (15) étant ménagé dans au moins une bride de fixation (16) du collecteur (1) à une culasse (3) dudit moteur (2), le plenum (8) et chacun des conduits d'air (13) au moins étant réalisés en un matériau de synthèse, **caractérisé en ce que**, pour chaque chambre de combustion (5) du moteur (2), au moins un conduit d'air aval (13) correspondant présente au moins un élargissement brusque (19) de sa section de passage, immédiatement suivi vers l'aval d'une portion (20) de conduit présentant une réduction progressive de section vers l'aval, se terminant (21) en amont de ladite bride de fixation (16).

2. Collecteur d'admission selon la revendication 1, **caractérisé en ce que** ledit élargissement brusque (19) est assuré par augmentation brusque de section d'un seul côté de l'axe longitudinal (X-X) dudit conduit d'air (13).

3. Collecteur d'admission selon la revendication 1, **caractérisé en ce que** ledit élargissement brusque (19a-19b) est assuré par augmentation brusque de section sur au moins deux côtés opposés dudit conduit d'air (13), ou sur toute la périphérie de ce dernier.

4. Collecteur d'admission selon l'une quelconque des revendications 1 à 3, **caractérisé en ce que** le rapport de la section du conduit d'air (13) au niveau dudit élargissement brusque (19) à la section dudit conduit d'air (13) immédiatement en amont dudit élargissement brusque (19) est de l'ordre de 2.

5. Collecteur d'admission selon l'une quelconque des revendications 1 à 4, **caractérisé en ce que** ladite portion (20) de conduit à réduction progressive de section s'étend sur une longueur (L), selon l'axe longitudinal (X-X) dudit conduit d'air (13), comprise entre environ 2,5 et environ 3 fois la hauteur (H) dudit élargissement brusque (19), mesurée sensiblement perpendiculairement à l'axe longitudinal (X-X) du conduit d'air (13), au niveau dudit élargissement brusque (19), la largeur dudit conduit d'air (13), perpendiculairement à sa hauteur et à sa longueur, étant sensiblement constante.

6. Collecteur d'admission selon l'une quelconque des revendications 1 à 5, **caractérisé en ce que** chaque conduit d'air (13) présente, en amont dudit orifice d'alimentation (15) dans ladite bride (16) de fixation sur la culasse (3), un logement (17) pour un injecteur (18) de carburant vers ledit orifice d'alimentation (15), et **en ce que** ladite portion (20) de conduit à réduction progressive de section a son extrémité aval (21) située en amont dudit logement (17) de l'injecteur (18).

7. Collecteur d'admission selon l'une quelconque des revendications 1 à 6, **caractérisé en ce que** ledit élargissement brusque (19) et ladite portion (20) de conduit à réduction progressive de section sont situés sensiblement dans la moitié aval dudit conduit d'air (13).

8. Collecteur d'admission selon l'une quelconque des revendications 1 à 7, **caractérisé en ce que** ledit élargissement brusque (19) et ladite portion (20) de conduit à réduction progressive de section sont situés dans une partie sensiblement rectiligne dudit conduit d'air (13), et ladite portion (20) de conduit à réduction progressive de section est au moins partiellement délimitée par au moins un plan incliné (22), en cas de section quadrangulaire du conduit d'air (13), ou par au moins une portion de tronc de cône, en cas de section circulaire ou oblongue du conduit d'air (13).

9. Collecteur d'admission selon l'une quelconque des revendications 1 à 7, **caractérisé en ce que** ledit élargissement brusque (19') et ladite portion de conduit (20') à réduction progressive de section sont situés dans une partie courbe dudit conduit d'air (13'), et ladite portion de conduit (20') à réduction progressive de section est au moins partiellement délimitée par une surface courbe (22'), à concavité tournée dans la même direction que celle de ladite partie courbe du conduit d'air (13').

10. Collecteur d'admission selon l'une quelconque des revendications 1 à 9, **caractérisé en ce que** chaque conduit d'air (13) est réalisé par solidarisation de deux demi-coques (13a,13b) moulées chacune d'une seule pièce, et dont l'une au moins (13b) présente l'élargissement brusque (19) et la portion (20) de conduit à réduction progressive de section.

## Patentansprüche

1. Lufteinlassverteiler für einen Motor (2) mit innerer Verbrennung, wobei der Verteiler (1) vom Typ mit einer gemeinsamen Vorkammer (8) für alle stromab liegenden, die Brennräume (5) des Motors (2) speisenden Luftleitungen (13) ist, der Luft durch eine Lufteinlassöffnung (9) zugeführt wird, die mit einer stromauf der besagten Einlassöffnung angeordneten Vorrichtung, wie einer Drosselklappe (10), zum Steuern der Luftzufuhr zum Motor (2) verbunden ist, und wobei für jeden Brennraum (5) des Motors (2) mindestens eine der stromab liegenden Luftleitungen (13) eine jeweilige Austrittsöffnung (14) der Vorkammer (8) mit einer entsprechenden Öffnung (15) zum Speisen des besagten Brennraumes (5) des Motors (2) verbindet, wobei die besagte Speiseöffnung (15) in mindestens einen Flansch (16) zum Befestigen des Verteilers (1) an einem Zylinderkopf (3) des besagten Motors (2) eingearbeitet ist, wobei mindestens die Vorkammer (8) und eine jede Luftleitung (13) aus einem synthetischen Material gefertigt sind, **dadurch gekennzeichnet, dass** für jeden Brennraum (5) des Motors (2) mindestens eine entsprechende stromab liegende Luftleitung (13) mindestens eine plötzliche Erweiterung (19) ihres Strömungsquerschnitts aufweist, an die sich unmittelbar stromab ein Leitungsabschnitt (20) mit einer progressiven Verengung des Querschnitts in Strömungsrichtung anschließt, die (bei 21) stromauf des besagten Befestigungsflanschs (16) endet.

2. Einlassverteiler nach Anspruch 1, **dadurch gekennzeichnet, dass** die besagte plötzliche Querschnittserweiterung (19) durch plötzliche Vergrößerung des Querschnitts auf allein einer Seite bezüglich der Längsachse (X-X) der besagten Luftleitung (13) erreicht ist.

3. Einlassverteiler nach Anspruch 1, **dadurch gekennzeichnet, dass** die besagte plötzliche Querschnittserweiterung (19a-19b) durch plötzliche Erweiterung des Querschnitts auf mindestens zwei einander gegenüber liegenden Seiten der Luftleitung (13) oder über den gesamten Umfang der letzteren erreicht ist.

4. Einlassverteiler nach einem der Ansprüche 1 bis 3, **dadurch gekennzeichnet, dass** das Verhältnis des Querschnitts der Luftleitung (13) im Bereich der plötzlichen Erweiterung (19) zu dem Querschnitt der Luftleitung (13) unmittelbar stromauf der plötzlichen Erweiterung (19) in der Größenordnung von 2 liegt.

5. Einlassverteiler nach einem der Ansprüche 1 bis 4, **dadurch gekennzeichnet, dass** der besagte Abschnitt (20) der Leitung mit progressiver Verringerung des Querschnitts sich über eine Länge (L) entlang der Längsachse (X-X) der besagten Luftleitung (13) erstreckt, die zwischen etwa 2,5 und 3 mal der Höhe (H) der plötzlichen Erweiterung liegt, gemessen im Wesentlichen lotrecht zur Längsachse (X-X) der Luftleitung (13) im Bereich der plötzlichen Erweiterung (19), wobei die Breite der Luftleitung (13) lotrecht zu ihrer Höhe und ihrer Länge im Wesentlichen konstant ist.

6. Einlassverteiler nach einem der Ansprüche 1 bis 5, **dadurch gekennzeichnet, dass** jede Luftleitung (13) stromauf der besagten Eintrittsöffnung (15) in dem Flansch (16) zur Befestigung am Zylinderkopf (3) eine Aufnahme (17) für eine Düse (18) zum Einspritzen von Brennstoff zu dieser Eintrittsöffnung (15) hin aufweist, und dass das stromab gelegene Ende (21) des Abschnitts (20) mit progressiver Verringerung des Querschnitts stromauf der Aufnahme (17) der Einspritzdüse (18) liegt.

7. Einlassverteiler nach einem der Ansprüche 1 bis 6, **dadurch gekennzeichnet, dass** die plötzliche Querschnittserweiterung (19) und der Abschnitt (20) mit progressiver Querschnittsverengung im Wesentlichen in der stromab Hälfte der besagten Luftleitung (13) liegen.

8. Einlassverteiler nach einem der Ansprüche 1 bis 7, **dadurch gekennzeichnet, dass** die plötzliche Querschnittserweiterung (19) und der Abschnitt (20) mit progressiver Querschnittsverengung in einem im Wesentlichen geradlinigen Abschnitt der Luftleitung (13) liegen, und dass der Abschnitt (20) mit progressiver Querschnittsverengung wenigstens teilweise von einer schiefen Ebene (22) im Falle eines viereckigen Querschnitts der Luftleitung (13) begrenzt ist, oder wenigstens einem Kegelstumpf-Abschnitt im Falle eines runden oder ovalen Querschnitts der Luftleitung (13).

9. Einlassverteiler nach einem der Ansprüche 1 bis 7, **dadurch gekennzeichnet, dass** die plötzliche Querschnittserweiterung (19') und der Abschnitt (20') mit progressiver Querschnittsverengung in einem gekrümmten Abschnitt der Luftleitung (13') liegen, und dass der Abschnitt (20') mit progressiver Querschnittsverengung wenigstens teilweise von einer gekrümmten Fläche (22') mit einer zur Krümmung des gekrümmten Abschnitts der Luftleitung (13) gleichsinnigen Konkavität begrenzt ist.

10. Einlassverteiler nach einem der Ansprüche 1 bis 9, **dadurch gekennzeichnet, dass** jede Luftleitung (13) durch feste Verbindung von zwei jeweils einstückig geformten Halbschalen (13a, 13b) gebildet ist, von denen mindestens eine die plötzliche Querschnittserweiterung (19) und den Abschnitt (20) mit progressiver Querschnittsverengung aufweist.

## Claims

1. An air intake manifold for an internal combustion engine (2), the manifold (1) being of the type comprising an upstream plenum (8), common to all the downstream air ducts (13) feeding the combustion chambers (5) of the engine (2) and supplied with air through an air inlet orifice (9) connected to a device for controlling the intake of air to the engine (2), such as a throttle body (10), mounted upstream of said inlet orifice (9), and, for each combustion chamber (5) of the engine (2), at least one of the downstream air ducts (13) connecting a respective outlet orifice (14) of the plenum (8) to a corresponding supply orifice (15) of said combustion chamber (5) of the engine (2), said supply orifice (15) being formed in at least one flange (16) that fixes the manifold (1) to a cylinder head (3) of said engine (2), the plenum (8) and each of the air ducts (13) at least being made of synthetic material, **characterized in that**, for each combustion chamber (5) of the engine (2), at least one corresponding downstream air duct (13) has at least one sudden enlargement (19) of its passage cross section, followed immediately in the downstream direction by a duct portion (20) having a progressive reduction in cross section in the downstream direction, ending (21) upstream of said fixing flange (16).

2. The intake manifold as claimed in claim 1, **characterized in that** said sudden enlargement (19) is ensured by a sudden increase in cross section on just one side of the longitudinal axis (X-X) of said air duct (13).

3. The intake manifold as claimed in claim 1, **characterized in that** said sudden enlargement (19a-19b) is ensured by a sudden increase in cross section in at least two opposite sides of said air duct (13) or along the entire periphery thereof.

4. The intake manifold as claimed in any one of claims 1 to 3, **characterized in that** the ratio of the cross section of the air duct (13) at said sudden enlargement (19) to the cross section of said air duct (13) immediately upstream of said sudden enlargement (19) is of the order of 2.

5. The intake manifold as claimed in any one of claims 1 to 4, **characterized in that** said duct portion (20) with a progressive reduction in cross section extends over a length (L), along the longitudinal axis (X-X) of said air duct (13), of between about 2.5 and about 3 times the height (H) of said sudden enlargement (19), which height is measured substantially at right angles to the longitudinal axis (X-X) of the air duct (13) at said sudden enlargement (19), the width of said air duct (13) at right angles to its height and its length being substantially constant.

6. The intake manifold as claimed in any one of claims 1 to 5, **characterized in that** each air duct (13) has, upstream of said supply orifice (15) in said flange (16) for fixing to the cylinder head (3), a housing (17) for a fuel injector (18) injecting fuel to said supply orifice (15), and **in that** said duct portion (20) with a progressive reduction in cross section has its downstream end (21) situated upstream of said housing (17) for the injector (18).

7. The intake manifold as claimed in any one of claims 1 to 6, **characterized in that** said sudden enlargement (19) and said duct portion (20) with a progressive reduction in cross section are situated substantially in the downstream half of said air duct (13).

8. The intake manifold as claimed in any one of claims 1 to 7, **characterized in that** said sudden enlargement (19) and said duct portion (20) with a progressive reduction in cross section are situated in a substantially straight part of said air duct (13) and said duct portion (20) with a progressive reduction in cross section is at least partially delimited by at least one inclined plane (22) if the air duct (13) has a rectangular cross section, or by at least one portion of a cone frustum, if the air duct (13) has a circular or oblong cross section.

9. The intake manifold as claimed in any one of claims 1 to 7, **characterized in that** said sudden enlargement (19') and said duct portion (20') with progressive reduction in cross section are situated in a curved part of said air duct (13'), and said duct portion (20') with a progressive reduction in cross section is at least partially delimited by a curved surface (22') with the concave side facing in the same direction as said curved part of the air duct (13').

10. The intake manifold as claimed in any one of claims 1 to 9, **characterized in that** each air duct (13) is produced by joining together two half-shells (13a-13b) each molded as a single piece, and at least one (13b) of which has the sudden enlargement (19) and the duct portion (20) with the progressive reduction in cross section.
